# EUROPEAN PATENT SPECIFICATION

(11) **EP 1 869 356 B1**
(45) Date of publication and mention of the grant of the patent: **20.01.2010**
(21) Application number: 06740321.2
(22) Date of filing: 03.04.2006
(51) Int. Cl.: F16L 23/18, F16L 25/02, F16J 15/06, F16J 15/12

(54) **ISOLATION GASKET, SYSTEM AND METHOD OF MANUFACTURE**
ISOLIERDICHTUNG, HERSTELLUNGSSYSTEM UND -VERFAHREN
JOINT STATIQUE D'ISOLATION, SYSTEME ET PROCEDE DE FABRICATION

(30) Priority: 04.04.2005 US 594396 P
(43) Date of publication of application: 26.12.2007
(73) Proprietor: Corrosion Control Corp. D/B/A Pikotek, Lakewood CO 80228 (US)
(72) Inventor: ANDERSON, Thornton, J., Denver, Colorado 80209 (US); WALLACE, Thomas, Englewood, Colorado 80113 (US)
(74) Representative: Fritzon, Rolf
(86) International application number: PCT/US2006/012163
(87) International publication number: WO 2006/107798

(56) References cited:
- FR-A- 1 590 813
- FR-A- 2 109 371
- US-A- 4 776 600
- US-A- 5 316 320
- US-A- 5 427 386
- US-A- 5 564 715

## Description

### Field of the Invention

The present invention relates generally to an isolation gasket which is adapted to be interposed and compressed between joined pieces of pipe in a flow line that is operative for fluid flow therethrough without leakage. More particularly, the present invention is directed to an isolation gasket that is part of a seal system which is particularly useful in high pressure, high temperature and/or highly corrosive environments. The present seal device is specifically adapted to provide electrical isolation between joined pipe sections.

### Background of the Invention

Seal systems using gasket devices have been used in a variety applications to prevent fluid from leaking between joined pieces. For example, a seal device is interposed and compressed between flanged end connections of a flow line wherein in-line process control equipment is to be installed. In-line process control equipment may include such things as valves, pumps, flow meters, temperature controllers, pressure controllers and the like. In addition, ends of pipe sections are provided with flanges so that the sections may be connected, end-to-end, to form the flow line. It is known to provide isolation gasket devices at the interfaces of the joined sections to prevent leakage of the fluid at the joint.

Regardless of the nature of the joint, that is, whether it is between the joined sections of pipe of whether the joint is used to connect in-line process control equipment, several issues must be addressed by the gasket device and seal system. Before selecting a gasket device for a specific application, many factors must be considered. These factors include the corrosive nature of the fluid flowing through the pipe line as well as the physical characteristics of that flowing fluid. Such physical characteristics include the pressure, temperature and velocity of the fluid. Additionally, the transfer of some fluids and/or the nature of fluids can result in the build up of electrical charge across the flange. Electrical discharges caused by difference in electrical potential create two issues. On one hand, electrical discharges can damage the integrity of the seal device. There is also the danger that an electrical discharge will create a spark that can ignite a flammable or explosive fluid in the flow line.

Therefore, flow line sealing systems face numerous challenges. For example, many materials which resist corrosive gases are not suitable for high pressure applications since the materials deform. Materials which are less prone to deformation, such as a graphite filled spiral wound metal seals, conduct electricity. Many materials that are used to create seal systems may melt at high temperatures, such as those that would result in a fire, so that the seal between flanges is compromised. This is an extremely dangerous situation since compromise of the seal system allows the fluid, such as a petroleum or gas product to rapidly leak from the flow line which can increase the available combustion products for such a fire, thus allowing the fire to feed upon itself.
Document US-A-4 776 600 discloses a dielectric pipe flange gasket providing a leak proof seal flow line sealing systems and document US-A-5 427 386 discloses a protective seal protecting flow line joints.

### Summary of the Invention

It is feature and advantage of the present invention to provide a new and useful isolation gasket and seal system that provides an interface between flange connections and flow line applications.

It is another feature and advantage of the present invention to provide an isolation gasket that helps eliminate false readings when a flange is undergoing hydrostatic testing.

It is another feature and advantage of the present invention to provide an isolation gasket that is suitable for use in fire safe applications.

To achieve the stated and other features, advantages and objects, embodiments of the invention provide an isolation device for use between joined pieces in a flow line that is operative for fluid passage therethrough without leakage comprising, for example, a flat metal plate, such as a flat annular metal plate, having opposing side surfaces and an opening formed in the metal plate to allow passage of fluid therethrough. In addition, a sheet of dielectric material is disposed on both side surfaces of the metal plate, for example, by laminating the sheet to both side surfaces of the metal plate. Further, at least one groove is formed on the side surface or surfaces on which the sheet of dielectric material is disposed which penetrates through the dielectric material and into the metal plate and which extends completely around the opening formed in the metal plate, and a layer of insulating material, as well as a seal element, are disposed in each of the grooves.

In embodiments of the invention the layers of dielectric material are disposed on both sides of the metal plate and a radial groove extending radially outwardly from the opening in the metal plate is formed into the metal plate and into both layers of dielectric material which extends completely around the opening in the metal plate. The radial groove can likewise have a layer of insulating material disposed therein. In further embodiments of the invention, one or more additional grooves can be formed on the side surface or surfaces on which the sheet of dielectric material is disposed which likewise penetrates through the dielectric material and into the metal plate and which extends completely around the opening and which is spaced apart from one or more other grooves formed on the same side surface or surfaces.

According to embodiments of the invention, the groove or grooves formed on the side surface or surfaces on which the sheet of dielectric material is disposed can have a cross section that is, for example, a rectangular shape, an isosceles trapezoid shape, a trapezoid shape, or a parallelogram shape. In a preferred embodiment, the layer of insulating material disposed in such grooves is formed, for example, of epoxy resin, is at least 0,127mm (0.005 inch) thick, and provides an electrical resistance of at least 2 mega ohms. According to other embodiments of the invention, the seal element disposed in such groove or grooves can be, for example, an O-ring seal element or an annular metal body seal element having, for example, a C-shaped cross-section, and the annular metal body seal element can additionally be provided with a coating of insulating material.

Other embodiments not part of the invention provide an isolation system between joined flange pieces, each of which has an inner and an outer face, in a flow line that is operative for fluid passage therethrough without leakage which utilizing, for example, a flat metal gasket with an opening formed therein to allow fluid passage therethrough, which flat metal gasket has opposing side surfaces on which are laminated sheets of dielectric material, each of which side surfaces has portions defining a groove that penetrates through the layer of dielectric material and into the metal plate and extends completely around the opening, and each of which grooves has a layer of insulating material and a seal element disposed therein.

In addition, such other embodiments involve use of the gasket in combination, for example, with at least one insulating sleeve receivable in an aligned bore formed in each of the joined flange pieces, which sleeve has a length that is substantially equal to a distance between the outer faces of the joined flange pieces with the gasket interposed therebetween. The insulating sleeve can be made, for example, of glass reinforced polymer material, epoxy material, phenolic material, or meta-aramid material. Further, such other embodiments include, for example, at least one elongate metal fastener with opposing ends, such as a headed metal bolt with threads for receiving a nut, which fastener is receivable in the insulating sleeve for collecting the joined flange pieces to one another with the flat metal gasket interposed therebetween.

Such other embodiments further comprise, for example, at least one washer made wholly or partly of materials having electrical insulation properties, such as a sheet of dielectric material laminated to one side of an annular washer substrate, which washer is receivable on the elongate metal fastener with the electrical insulation material abutting one of the flange piece outer faces. Such other embodiments can also include, for example, at least one spring force exerting component, such as a Belleville washer, receivable on the elongate metal fastener abutting the electrically insulated washer.

Still another embodiment of the isolation device not part of the invention comprises a flat metal plate having opposing side surfaces and an opening formed therein to allow fluid passage therethrough, a layer of dielectric material disposed on one or both of the opposing side surfaces, at least one groove formed on the side surface or surfaces on which the sheet of dielectric material is disposed which penetrates through the dielectric material and into the metal plate and which extends completely around the opening formed in the metal plate, and an annular metal seal element coated with an insulating material disposed in the groove.

These and other objects, advantages and novel features will be set forth in part in the description which follows, and in part will become more apparent to those skilled in the art upon examination of the following detailed description, or may be learned from practice of the invention.

### Brief Description of the Drawings

Figure 1 is a side view in elevation and partial cross-section showing the isolation gasket and sealing system according to a first exemplary embodiment ;
Figure 2 is an enlarged side view in partial cross-section showing a representative nut and bolt set used with various insulating components for electrically isolating a flange joint for embodiments of the invention;
Figure 3 is a perspective view of an isolation gasket according to a first exemplary embodiment;
Figure 4 is an exploded cross-sectional view of the isolation gasket of Figure 3 ;
Figure 5 is an enlarged cross-sectional view of one of the seal grooves of the isolation gasket of Figures 3 and 4 for embodiments of the invention;
Figure 6 is a front view in elevation, partially broken away of an example of one type of insulating washer that could be used with the seal system according to embodiments of the invention;
Figure 7 is a cross-sectional view of an edge of an example of one type of insulating washer of Figure 6 for embodiments of the invention;
Figure 8 is a front view in elevation of a Belleville washer that can be used with alternate embodiments of the isolation system of the present invention;
Figure 9 is a cross-sectional view taken about lines 9-9 of Figure 8;
Figure 10 is cross-sectional view of a portion of an isolation gasket according to a first exemplary embodiment of the present invention;
Figures 11(a) -11(d) are cross-sectional views diagramming various groove cross-sections that may be used with the isolation gaskets of embodiments of the present invention; and
Figure 12 is a cross-sectional view partially broken away of an isolation gasket according to another exemplary embodiment of the present invention.

### Detailed Description

Reference will now be made in detail to embodiments of the isolation device, one or more examples of which are illustrated in the accompanying drawings. Each example of the invention is provided by way of explanation of the invention, not as a limitation of the invention. It will be apparent to those skilled in the art that various modifications and variations can be made in the present invention without departing from the scope of the invention as defined by the claims.

The present invention is generally directed to an isolation gasket adapted to be used between two flanges in a flow line application. Such flanges may be the flange connection between two sections of pipeline which are connected in end-to-end relation. Alternatively, such flanges may be those used to connect monitoring equipment to the flow line.

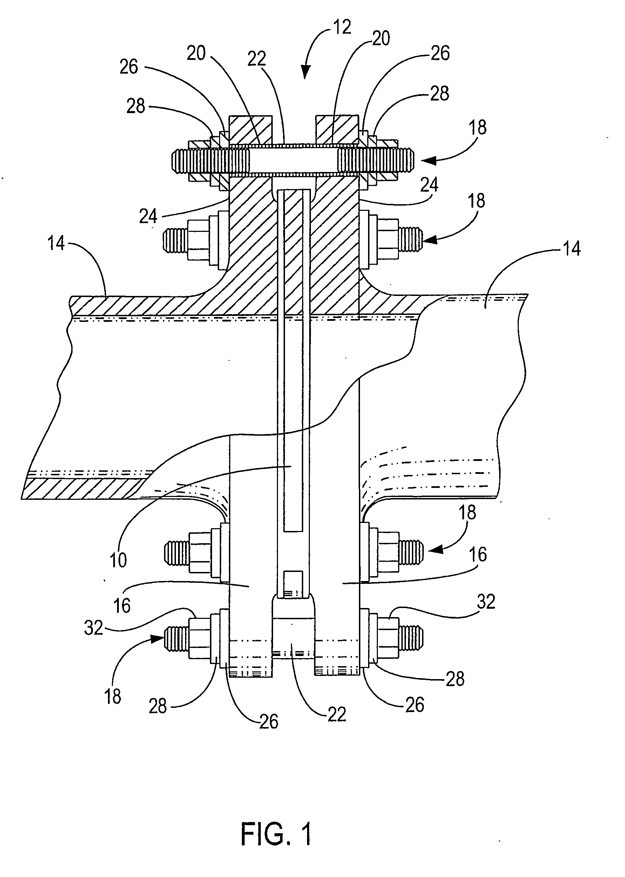

Accordingly, such a flange connection will be introduced in reference to the end-to-end connection of a pair of pipeline sections, but it should be clearly understood that the present invention is not limited to such applications. Thus, for example, as is shown in Figure 1, an isolation gasket 10 is located in a flange connection 12 between two pipe sections 14 in a flow line application. Each of pipe sections 14 includes flanges 16 which may be placed in confronting relationship with gasket 10 therebetween. Flanges 16 are provided with bores 20 which align with one another so that flanges 16 may be connected by nut and bolt sets 18, as is known in the art.

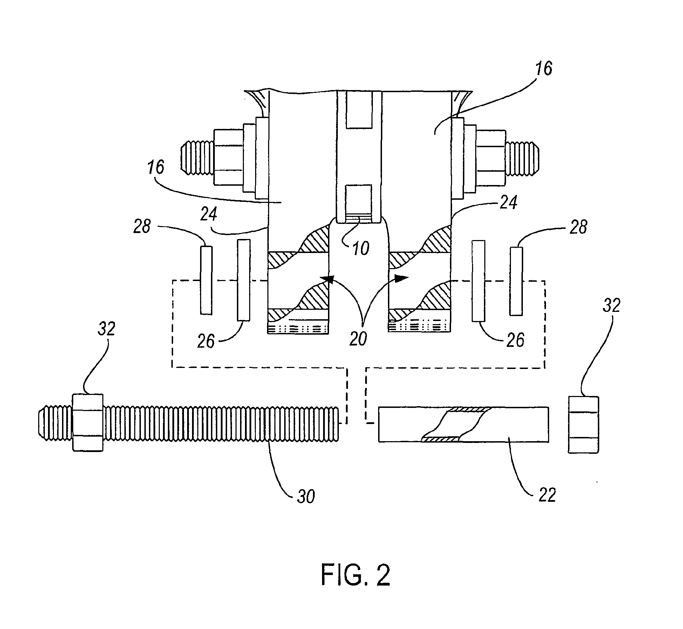

With continued reference to Figure 1, and with further reference to Figure 2, it may be seen that electrical isolation between flanges 16 is accomplished by a plurality of different components associated with each aligned pair of bores 20. Here, a pair of aligned bores 20 is provided with a sleeve 22 constructed, for example, of a glass reinforced polymer although other materials, such as epoxy, phenolic and nomex materials may be suitably employed. Sleeve 22 is dimensioned to have a length that is about the same as the distance between outer surfaces 24 of flanges 16 and the thickness of gasket 10 interposed therebetween. Once sleeve 22 has been inserted into a pair of aligned bores 20, insulating washers, as described more thoroughly below, are placed on either side of bores 20 on outer surfaces 24 of flanges 16. Metal washers 28, which can take the form of a spring force exerting component such as a Belleville washer, are then positioned against washer 26 and bolt 30 is passed through the washers and sleeve 22 after which it is secured by nuts 32. This assembly is undertaken for each of the aligned bores 20 after which nuts 32 may be tightened to compress gasket 10 at a desired pressure.

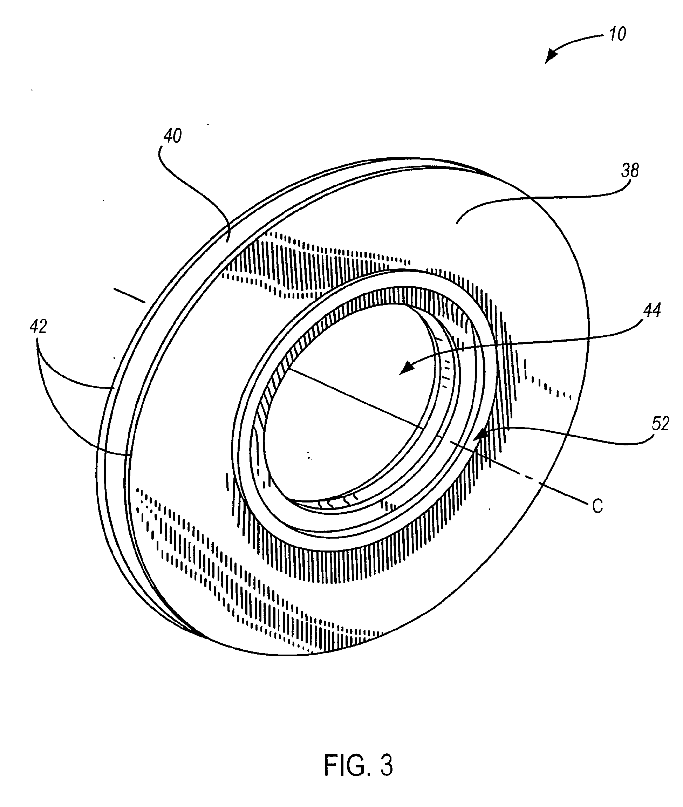

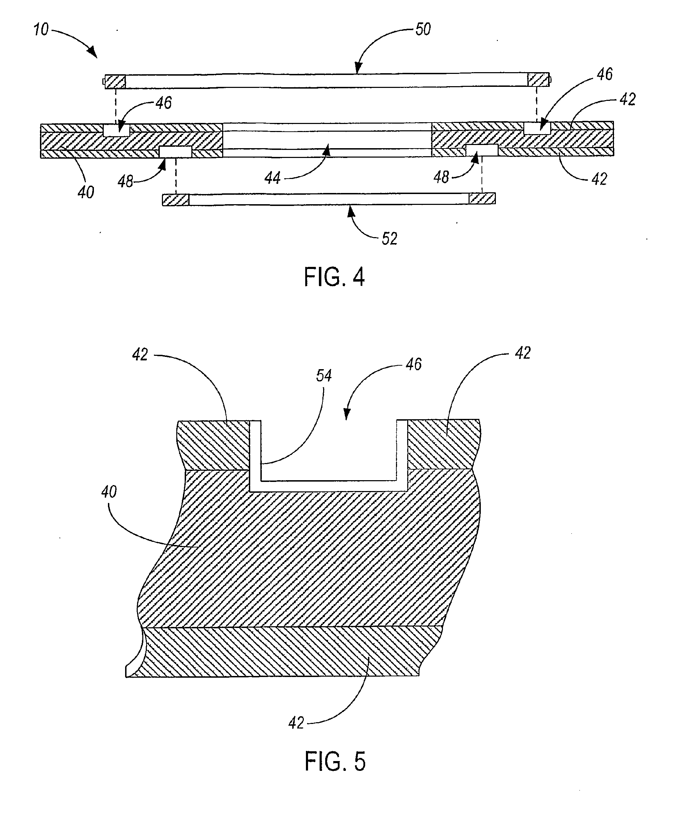

The present invention contemplates both improvements to isolation gasket 10 as well as to the use of insulating washer 26. To this end, as is illustrated in Figures 3-5, the construction of isolation gasket 10 may be appreciated in greater detail. Here, it may be seen that isolation gasket 10 includes the gasket body 38 formed by a flat annular metal plate 40 having an opening 44 therethrough to allow fluid passage in a flow line application. Dielectric linings 42 are laminated on each outer surface of metal plate 40, as is well known in the art. As is seen in Figure 4, a pair of grooves 46 and 48 are formed in the opposite surfaces of gasket body 38 with each of these grooves penetrating through the dielectric linings 42 and into metal plate 40. Groove 46, as illustrated, has a larger diameter than groove 48 so that grooves 42 and 48 are radially offset from one another relative to opening 44. Suitable seals 50 and 52 are sized and adapted to be nested in respective grooves 46 and 48.

A feature provided in the present invention is illustrated in Figure 5 with respect to groove 46, although it should be understood that groove 48 is similarly treated. As is illustrated in Figure 5, groove 46 has a layer 54 of insulating material placed therein with this insulating material being approximately 0,127 mm (.005 inches) thick so as to provide a resistance of approximately 2 mega ohms. Layer 54 is formed by any suitable epoxy resin having such resistance characteristics. In manufacture, after grooves are machined in gasket body 38, this epoxy resin may be sprayed, painted or otherwise applied and then cured to produce the desired coating.

Coatings 54 have been found to be an important feature in isolation gaskets, especially during conditions of hydrostatic testing. When hydrostatic testing is undertaken, it is possible for water to infiltrate grooves 46 and 48 thus providing an electrical short between flanges 16 at flange connection 12. Such an electrical short can indicate a failure of the system since electrical conductivity can cause unwarranted electrolysis or corrosion of the flange joint. Moreover, many fluids in the flow line, such as petroleum products, may contain water, and electrical shorting can lead to degradation of the flange joint.

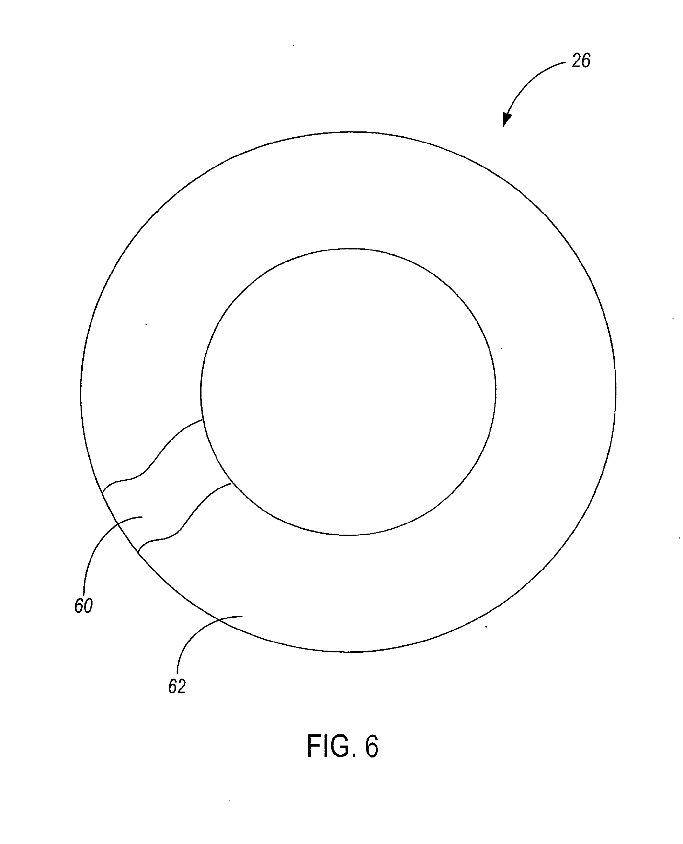

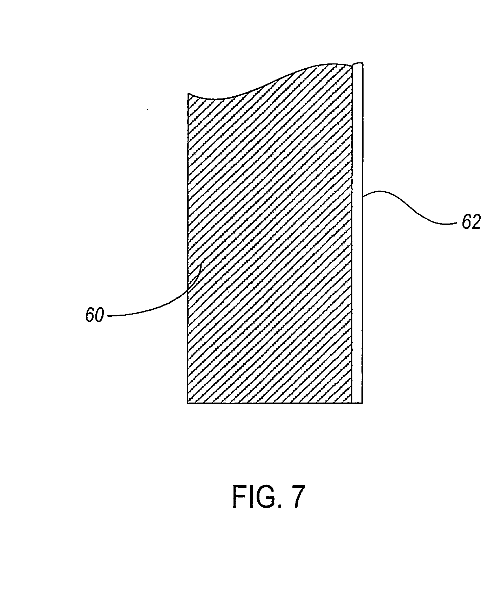

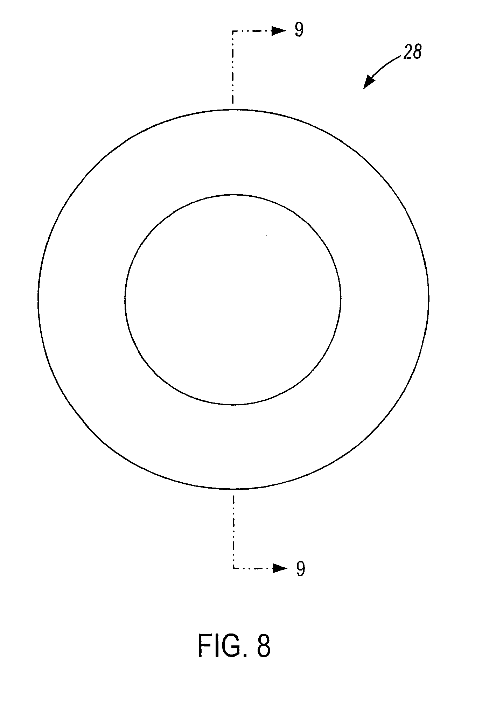

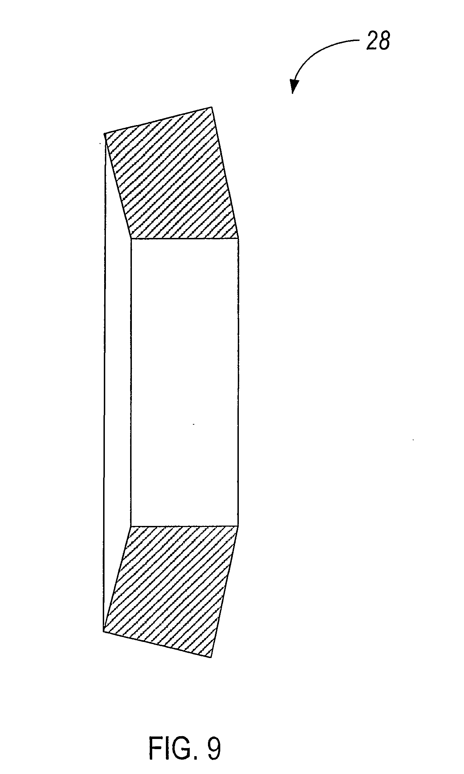

As noted above, the isolation gasket system according to the present invention utilizes insulation washers 26 and metal washers 28. A representative insulating washer 26 is illustrated in Figures 6 and 7. Here, each insulating washer 26 is formed by a metal annulus 60 of any suitable material. A glass reinforced epoxy laminate, similar to dielectric linings 42, is laminated onto the washer. This glass reinforced epoxy laminate layer 62 may be approximately 0,381 mm (.015 inches) thick. In use, laminate layer 62 is placed against the outer surface 24 of a respective flange 16 and pressure is applied thereto by way of nuts 32 acting through metal washers 28 which are placed in abutment with metal annulus 60. While the glass reinforced epoxy laminated onto a metal annulus 60 is an example of an insulating washer, any washer that provides complete electrical isolation, for example, can be used as well. Figures 8 and 9 illustrate an example of a Belleville washer that can be used in alternate embodiments of the invention.

In the past, insulating washers have been used wherein such insulating washers are formed by a substantial thickness of insulating material. This material has had some drawbacks since the insulating material is, itself, relatively soft and is subject to deformation upon the application of higher pressures. Moreover, in the event of a fire, such washers either bum or melt which sufficiently loosens the flange connection allowing the flow line products to leak. Where such materials are petroleum products, this can lead to a catastrophic fire.

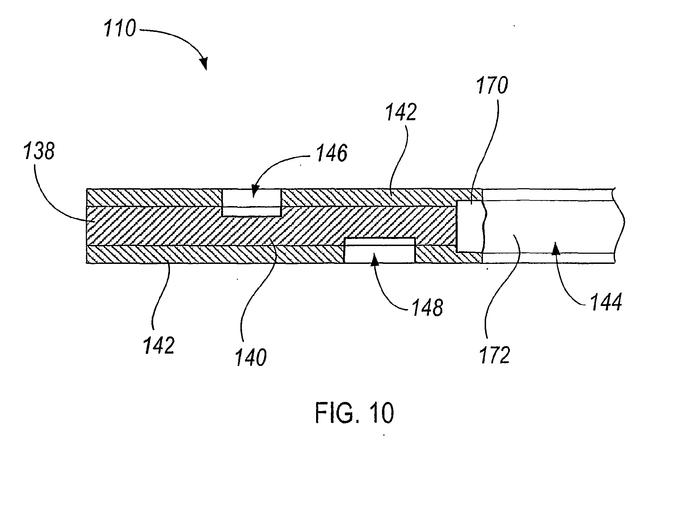

Figure 10 illustrates a gasket body 38 according to the first exemplary embodiment of the present invention. Here, an isolation gasket 110 is provided with a gasket body 138 formed by a flat annular metal plate 140 that has dielectric linings 142 laminated thereon. Grooves 146 and 148 are again machined through dielectric linings 142 and into metal core 140. In this embodiment a radial groove or channel 170 extends radially outwardly from opening 144 with this radial channel 170 being formed into both of layers 142 and metal core 140. Channel 170 is then filled with an insulating epoxy resin of the type similar to that used in grooves 146 and 148. By providing this channel and filling the channel with insulating material, such structure helps prevent electrical arching across the gasket and therefore reduces the risk of corrosion.

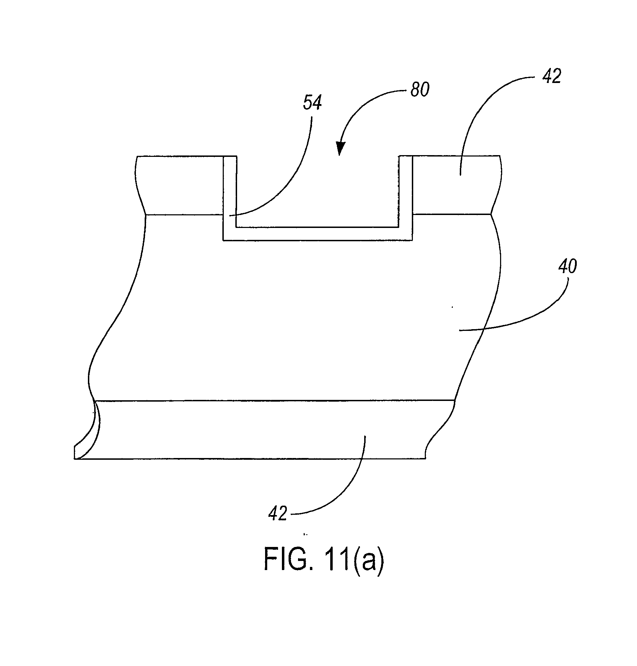

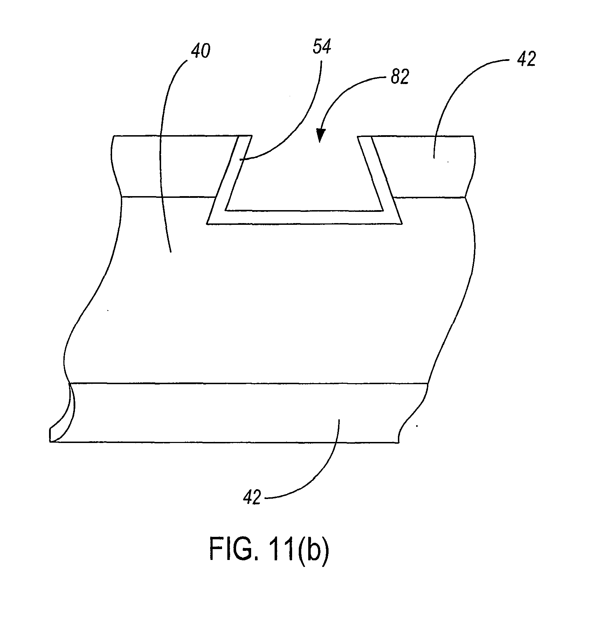

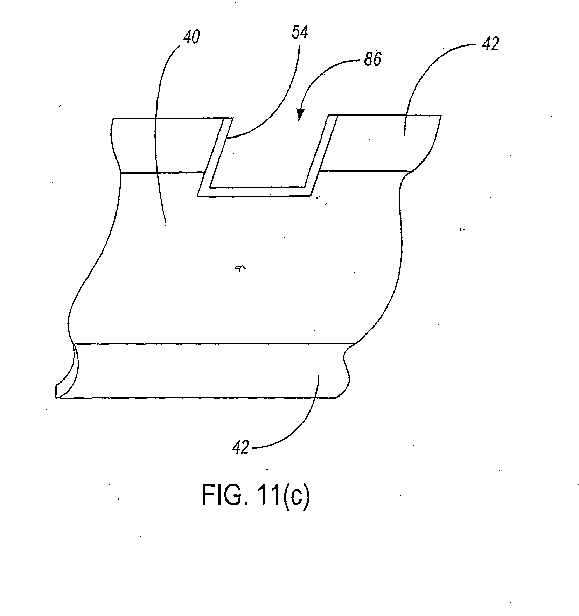

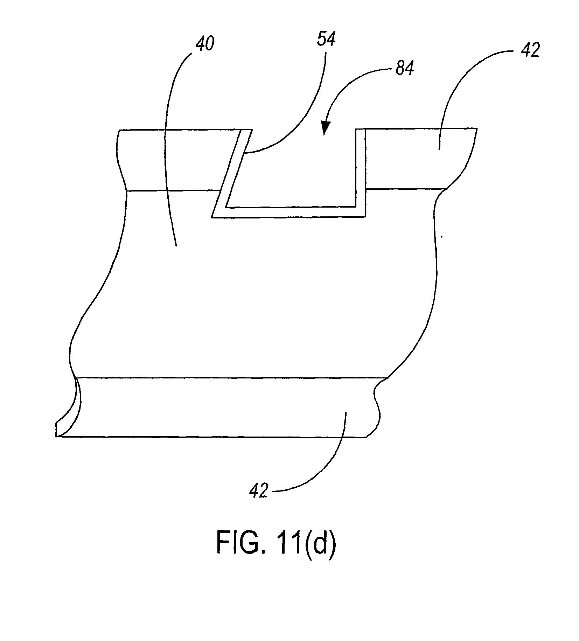

With reference now to Figures 11(a)-11(d), it should be appreciated that various configurations of grooves, such as grooves 46 and 48 may be employed with the present invention. For example, in Figure 11(a) groove 80 is a rectangular cross-section groove formed through dielectric material 42 and into metal core 40. Groove 80 is then coated with the insulating layer 54, as described above. Figure 11(b) provides a groove 82 that is a trapezoidal dovetail configuration. Groove 82 is again cut through dielectric layer 42 and into metal core 40 and is coated with insulative lining 54. In Figure 11(c), groove 86 has the cross-section of a parallelogram and is again formed through insulating layer 42 and into metal core 40. It is again lined with an insulative coating 54. finally, Figure 11 (d) illustrates a trapezoidal groove 84 having one side thereof oriented at a right angle to the base. Groove 86 is cut through dielectric layer 42 and into metal core 40, and it is lined with insulating coating 54 described above.

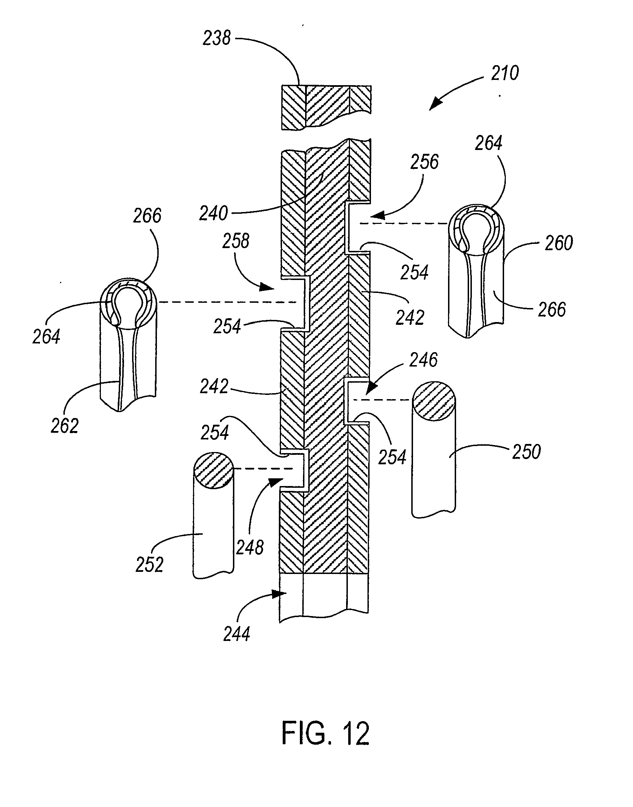

With reference now to Figure 12, another exemplary embodiment of an isolation gasket 210 is shown according to the present invention. Here, isolation gasket 210 includes a gasket body 238 formed by a flat metal plate 240 having dielectric linings 242 on opposite outer surfaces thereof. Gasket body 238 has an opening 244 to allow fluid flow therethrough and the flow line application. A pair of first grooves 246 and 248 are cut through dielectric layers 242 and into metal core 240 in a manner similar to that described with respect to the first embodiment. Seals, such as O-ring seals 250 and 252 may be seated in grooves 246 and 248, respectively, with each of grooves 246 and 248 being coated with an insulation coating 254.

In the embodiment shown in Figure 12, however, a second set of grooves 256 and 258 are machined through dielectric layers 242 and into metal core 240 with each of grooves 256 and 258 being radially spaced outwardly of opening 244. If desired, each of grooves 256 and 258 may be provided with an insulative coating 254, all as described above. In Figure 12, a pair of seals 260 and 262 are provided for insertion into grooves 256 and 258. Here, each of seals 260 and 262 are formed by a C-shaped cross-section annular metal body 264 which is provided with a Teflon coating 266 that provides further insulation. Seals 260 and 262 allow for the application of greater compressive forces between flanges 16 and a joint connection. It should be understood, however, that by providing coatings 254 in grooves 256 and 258, it may be possible to use a simple C-shaped metal seal without the Teflon coating. Alternatively, by providing the Teflon coating, it may be possible to eliminate coatings 254 in the grooves 256 and 258.

As will be appreciated by those skilled in the art, industries such as the oil and gas industry utilize many, many miles of connected metal pipelines that are subjected, for example, to a natural flow of current through the pipeline and across the metal-to-metal flange connections in the pipeline which causes the flange connections to corrode and build up corrosion similar to battery terminals. The isolation gasket for embodiments of the invention interrupts that current flow through a pipeline and prevents the flanges from corroding and building up corrosion in the way in which they would with a metal-to-metal seal.

It is to be understood that embodiments of the invention cover a wide range of applications, including without limitation, not only insulation but also potential fire safety, such as fire sealing applications. In that regard, combinations including washers for embodiments of the invention are significant aspects of the invention because, for example, if the washer material deforms or begins to flow because of heat, the washers will let go, allowing the bolts to let go. If the bolts let go, there is no longer any compression in the joint between the two flanges in the flow line, which means the gasket no longer seals the joint.

Thus, alternative embodiments of the invention can employ fastening means utilizing a component that exerts a resilient spring force on the bolt. While the Belleville washer is an example of such a component, according to such alternate embodiment, any component that continues to exert a spring force on the joint, for example, even as the bolt begins to expand with heat, can be used as well. Another aspect of such alternate embodiments is the combination of the spring force-exerting component of the fastening means with an insulating washer that has metal, such as steel, on the face abutting the spring force-exerting component and a high temperature resistant insulating material on the opposite face.

It is to be further understood that a preferred method of making the gasket material for embodiments of the invention involves bonding the dielectric lining material to both sides of the metal substrate in large sheets to assure uniformity of the lamination. According to such preferred method, a water jet is thereafter utilized to cut appropriately dimensioned I.D and O.D. circles for gaskets out of the large sheets, and the grooves are formed on opposite sides of the cut-out circular gasket material, for example, with the circular gasket material mounted on a lathe. The resulting isolation gasket for embodiments of the invention has the stability and/or rigidity of a metal gasket with a stainless steel core having excellent corrosion resistance properties, while the glass reinforced epoxy laminated to the opposing surfaces of the gasket provides excellent insulating properties.

As also previously noted, another important aspect of embodiments of the invention is the application of a suitable insulating material to the grooves that are formed in the gasket body. Representative examples of suitable insulating materials include silicon based materials, such as Dow Coming SE9120 cured at room temperature, and epoxy based materials, such as Shell epoxy resin EPON 828 with Shell hardener Epigure 3234 or Shell epoxy resin EPON 828 with polyamide based hardener, both cured at room temperature for 10-15 hours and thereafter at a post cure higher temperature. Preferably, the above insulating materials can be applied with a coating thickness of between 2mil and 8mil, for example, by pouring a viscous solution into the groove and allowing it to flow or by continuous injection gun with a rotating table.

As likewise previously noted, another important aspect of embodiments of the invention is the seating of a suitable type of seal in the grooves of the gasket body. Representative examples of seal options include spring energized Teflon seals, as well as other types of O-ring or soft material as a back-up seal, or metal seals coated, for example, with a softer insulating material, such as PTFE. As similarly previously noted, a further important aspect of embodiments of the invention is the shape of the grooves formed in the gasket body. A factor in selecting one or more of the groove shapes previously described is the particular type of seal that is intended to be used. As internal pressure acts on the seal, the shape of the groove provides support for the seal and, keeps it from blowing out. Thus, a groove with a particular cross section may provide better support and enable better sealing characteristics for a particular type of seal element than a groove with a different cross section.

Various preferred embodiments of the invention have been described in fulfillment of the various objects of the invention. It should be recognized that these embodiments are merely illustrative of the principles of the present invention. Numerous modifications and adaptations thereof will be readily apparent to those skilled in the art without departing from the scope of the present invention as defined by the appended claims.

## Claims

1. An isolation device (10) for use between joined pieces (16) in a flow line (14) that is operative for fluid passage therethrough without leakage, comprising:
a flat metal plate (40; 140; 240) having opposing side surfaces and an opening (44; 144; 244) formed therein to allow fluid passage therethrough;
a layer of dielectric material (42; 142; 242) disposed on each of said opposing side surfaces
at least one groove (46, 48; 146, 148; 246, 248, 256, 258) formed on at least one of said opposing side surfaces which penetrates through said layer of dielectric material and into said metal plate and which extends completely around said opening;
a layer of insulating material (54; 254) disposed in said at least one groove;
a seal element (50, 52; 250, 252, 260, 262) disposed in said at least one groove; and **characterised by**
a radial groove (170) extending radially outwardly from said opening in said metal plate and formed into said metal plate and into both of said layers of dielectric material which extends completely around said opening.

2. The isolation device of claim 1, wherein said metal plate further comprises a flat annular metal plate.

3. The isolation device of claim 1, wherein said layer of dielectric material is laminated to each of said opposing side surfaces.

4. The isolation device of claim 1, further comprising at least one groove formed on each of said opposing side surfaces, each of which penetrates through said layer of dielectric material and into said metal plate, and each of which extends completely around said opening.

5. The isolation device of claim 1, further comprising a layer of insulating material disposed in said radial groove.

6. The isolation device of claim 1, further comprising at least one additional groove formed on said at least one of said opposing side surfaces which penetrates through said layer of dielectric material and into said metal plate and which extends completely around said opening and which is spaced apart from said at least one groove.

7. The isolation device of claim 1, wherein said at least one groove has a cross section that is one of a rectangular shape, an isosceles trapezoid shape, a trapezoid shape, and a parallelogram shape.

8. The isolation device of claim 1, wherein said layer of insulating material is at least 0,127mm (.005 inches) thick.

9. The isolation device of claim 1, wherein said layer of insulating material provides an electrical resistance of at least 2 mega ohms.

10. The isolation device of claim 1, wherein said layer of insulating material is formed of epoxy resin.

11. The isolation device of claim 1, wherein said seal element further comprises an 0-ring seal element.

12. The isolation device of claim 1, wherein said seal element further comprises an annular metal body seal element.

13. The isolation device of claim 12, wherein said annular metal body seal element has a coating of insulating material.

## Patentansprüche

1. Isoliervorrichtung (10) zur Verwendung zwischen zusammengefügten Teilen (16) in einer Strömungslinie (14), durch die Fluid ohne Leckage passiert werden kann, umfassend:
eine flache Metallplatte (40; 140; 240) mit einander gegenüberliegenden Seitenflächen und
einer Öffnung (44; 144; 244), die darin ausgebildet ist, um ein Passieren von Fluid dort hindurch zu gestatten;
eine Lage aus dielektrischem Material (42; 142; 242), die auf jeder der einander gegenüberliegenden Seitenflächen angeordnet ist;
mindestens eine Nut (46, 48; 146, 148; 246, 248, 256, 258), die auf mindestens einer der einander gegenüberliegenden Seitenflächen ausgebildet ist und sich durch die Lage aus dielektrischem Material und in die Metallplatte erstreckt und vollständig um die Öffnung herum verläuft;
eine Lage aus Isoliermaterial (54; 254), die in der mindestens einen Nut angeordnet ist;
ein Dichtungselement (50, 52; 250, 252, 260, 262), das in der mindestens einen Nut angeordnet ist; und
**gekennzeichnet durch**
eine Radialnut (170), die sich von der Öffnung in der Metallplatte radial nach außen erstreckt und in der Metallplatte und in beiden Lagen aus dielektrischem Material ausgebildet ist und vollständig um die Öffnung herum verläuft.

2. Isoliervorrichtung nach Anspruch 1, wobei die Metallplatte weiterhin eine flache, ringförmige Metallplatte umfasst.

3. Isoliervorrichtung nach Anspruch 1, wobei die Lage aus dielektrischem Material auf jeder der einander gegenüberliegenden Seitenflächen laminiert ist.

4. Isoliervorrichtung nach Anspruch 1, die weiterhin mindestens eine Nut umfasst, die auf jeder der einander gegenüberliegenden Seiten ausgebildet ist und die sich jeweils durch die Lage aus dielektrischem Material und in die Metallplatte erstrecken und jeweils vollständig um die Öffnung herum verlaufen.

5. Isoliervorrichtung nach Anspruch 1, die weiterhin eine Lage aus Isoliermaterial umfasst, die in der Radialnut angeordnet ist.

6. Isoliervorrichtung nach Anspruch 1, die weiterhin mindestens eine zusätzliche Nut umfasst, die an der mindestens einen der einander gegenüberliegenden Seitenflächen ausgebildet ist, sich durch die Lage aus dielektrischem Material und in die Metallplatte erstreckt und die vollständig um die Öffnung herum verläuft und von der mindestens einen Nut beabstandet ist.

7. Isoliervorrichtung nach Anspruch 1, wobei die mindestens eine Nut einen Querschnitt hat, der eine rechteckige Form oder eine gleichschenklige Trapezform oder eine Trapezform oder eine Parallelogrammform aufweist.

8. Isoliervorrichtung nach Anspruch 1, wobei die Lage aus Isoliermaterial eine Dicke von mindestens 0,127 mm (0,005 Zoll) aufweist.

9. Isoliervorrichtung nach Anspruch 1, wobei die Lage aus Isoliermaterial einen elektrischen Widerstand von mindestens 2 Megaohm bereitstellt.

10. Isoliervorrichtung nach Anspruch 1, wobei die Lage aus Isoliermaterial durch Epoxidharz gebildet ist.

11. Isoliervorrichtung nach Anspruch 1, wobei das Dichtungselement weiterhin ein O-Ring-Dichtungselement umfasst.

12. Isoliervorrichtung nach Anspruch 1, wobei das Dichtungselement weiterhin ein ringförmiges Metallkörper-Dichtungselement umfasst.

13. Isoliervorrichtung nach Anspruch 12, wobei das ringförmige Metallkörper-Dichtungselement eine Beschichtung aus Isoliermaterial aufweist.

## Revendications

1. Dispositif (10) d'isolation destiné à être utilisé entre des pièces jointes (16) dans une conduite d'écoulement (14) exploitable pour le passage d'un fluide à travers celle-ci sans fuites, comprenant :
une plaque métallique plate (40 ; 140 ; 240) présentant des surfaces latérales opposées et une ouverture (44 ; 144 ; 244) formée dans celle-ci pour permettre le passage d'un fluide à travers celle-ci ;
une couche de matériau diélectrique (42 ; 142 ; 242) disposée sur chacune desdites surfaces latérales opposées ;
au moins une rainure (46, 48 ; 146, 148 ; 246, 248, 256, 258) étant formée sur au moins une desdites surfaces latérales opposées, qui pénètre à travers ladite couche de matériau diélectrique et dans ladite plaque métallique et qui s'étend complètement autour de l'ouverture ;
une couche de matériau isolant (54 ; 254) disposée dans ladite ou lesdites rainures ;
un élément d'étanchéité (50, 52 ; 250, 252, 260, 262) disposée dans ladite ou lesdites rainures ; et
**caractérisé par**
une rainure radiale (170) s'étendant radialement vers l'extérieur à partir de ladite ouverture dans ladite plaque métallique et formée dans ladite plaque métallique et dans chacune desdites deux couches de matériau diélectrique, qui s'étend complètement autour de ladite ouverture.

2. Dispositif d'isolation selon la revendication 1, ladite plaque métallique comportant en outre une plaque métallique annulaire plate.

3. Dispositif d'isolation selon la revendication 1, ladite couche de matériau diélectrique étant stratifiée sur chacune desdites surfaces latérales opposées.

4. Dispositif d'isolation selon la revendication 1, comportant en outre au moins une rainure formée sur chacune desdites surfaces latérales opposées, chacune de celles-ci pénétrant à travers ladite couche de matériau diélectrique et dans ladite plaque métallique, et chacune d'elles s'étendant complètement autour de ladite ouverture.

5. Dispositif d'isolation selon la revendication 1, comportant en outre une couche de matériau isolant disposée dans ladite rainure radiale.

6. Dispositif d'isolation selon la revendication 1, comportant en outre au moins une rainure supplémentaire formée sur ladite ou lesdites surfaces latérales opposées, qui pénètre à travers ladite couche de matériau diélectrique et dans ladite plaque métallique, s'étend complètement autour de ladite ouverture et est espacée par rapport à ladite ou auxdites rainures.

7. Dispositif d'isolation selon la revendication 1, ladite ou lesdites rainures possédant une section droite présentant soit une forme rectangulaire, soit une forme trapézoïdale isocèle, soit une forme trapézoïdale, soit une forme en parallélogramme.

8. Dispositif d'isolation selon la revendication 1, ladite couche de matériau isolant présentant une épaisseur d'au moins 0,127 mm (0,005 pouce).

9. Dispositif d'isolation selon la revendication 1, ladite couche de matériau isolant donnant une résistance électrique d'au moins 2 mégohms.

10. Dispositif d'isolation selon la revendication 1, ladite couche de matériau isolant étant formée de résine époxy.

11. Dispositif d'isolation selon la revendication 1, ledit élément d'étanchéité comportant en outre un élément d'étanchéité à joint torique.

12. Dispositif d'isolation selon la revendication 1, ledit élément d'étanchéité comportant en outre un élément d'étanchéité à corps métallique annulaire.

13. Dispositif d'isolation selon la revendication 12, ledit élément d'étanchéité à corps métallique annulaire étant doté d'un revêtement en matériau isolant.
